# EUROPEAN PATENT SPECIFICATION

(11) **EP 2 392 205 B1**
(45) Date of publication and mention of the grant of the patent: **28.11.2012**
(21) Application number: 10164608.1
(22) Date of filing: 01.06.2010
(51) Int. Cl.: A01F 15/07, A01F 15/18

(54) **Round baler**
Rundballenpresse
Roto-presse

(43) Date of publication of application: 07.12.2011
(73) Proprietor: Deere & Company, Moline, IL 61265-8098 (US)
(72) Inventor: Pourchet, Jérémy, 70100, Chargey-les-Gray (FR)
(74) Representative: Magin, Ludwig Bernhard

(56) References cited:
- DE-A1- 3 118 663
- US-B1- 6 170 246

## Description

This invention relates to a round baler having a frame and a gate with at least one roll, whereas the gate and the roll are connected to the frame by means of a gate bearing and a roll bearing arranged concentrically to each other.

DE 31 18 663 A1 discloses a round baler with a gate, which is vertically pivotably connected to a front frame. The pivot axis of the gate bearing coincides with an axis of an upper front roll of the gate, carrying a belt.

The problem this invention is based on is seen in the need to remove the gate in order to replace the upper front roll.

This problem is solved in an innovative way by means of the teaching of claim 1, whereas advantageous features further developing the invention are given in the claims related to claim 1.

The gate may assume any structure, like with or without sidewalls, with rolls only or with belts or chains trained over rolls, etc. The gate and/or roll bearing may be of the thrust bearing, roll bearing, needle bearing type and these bearings may follow onto each other in the axial or in the radial direction. The slot needs to be wide enough to let pass at least an axle or a stub shaft at the axially outer end areas of the roll. The meaning of "slot" covers any kind of opening of the bearing in the radial direction. This solution allows to leave the gate on the frame and to take away the roll only, which is faster and does not require a crane or the like.

In order to securely hold the gate on the frame, but at the same time being able to remove the roll through the slot, a removable bridge is provided over the gate bearing, which can be fixed by means of bolts, clamps etc. Said bridge is normally formed like a semicircle, but could also be smaller or bigger.

A simple way to fix and remove the roll bearing is by fixing it at the face side of the gate bearing, which is easily accessible and does not require tight tolerances at the radially inner and outer surface. The roll bearing may be provided with apertures or protrusions to be fixed, or be contained in a cavity or within a shoulder on the gate bearing. Alternately it may even be fixed on the frame.

The removal of the roll is getting the easier, if the slot of the gate bearing extends through the surrounding part of the gate, such that a radial movement is possible. Alternately, a big opening could be provided in the bearing area, through which the roll could be removed in an axial direction.

In order to avoid that the gate gets weak in the slot area, or that crop accumulates in the slot, said slot can be closed by a plate or another structural part serving the same purpose. Said plate is preferably bolted to the surrounding gate area.

A gate without stiff sidewalls, but skirts overlapping side walls on the main frame in the closed situation is lighter than an ordinary gate and creates less stress in the area of the split gate bearing.

A gate which does not cover the bale chamber by rolls, but by an endless belt is lighter and hence creates less stress. In addition, if the web spans the entire distance between the sides of the bale chamber no crop can exit and get exposed to the rotating shaft of the roll, which will protect the bearings.

A closed or substantially closed surface, i.e. one through which mainly dust or the like may escape also avoids the escape of bigger crop particles, which may affect the bearings. In order to avoid that the belt collapses, its side edges are routed on or in paths. Said paths may be formed in or on the sidewalls, the skirts etc.

Hereafter one embodiment of the invention is described in more detail and in relation to the drawing. It is shown in:
- Fig. 1: a round baler in side view,

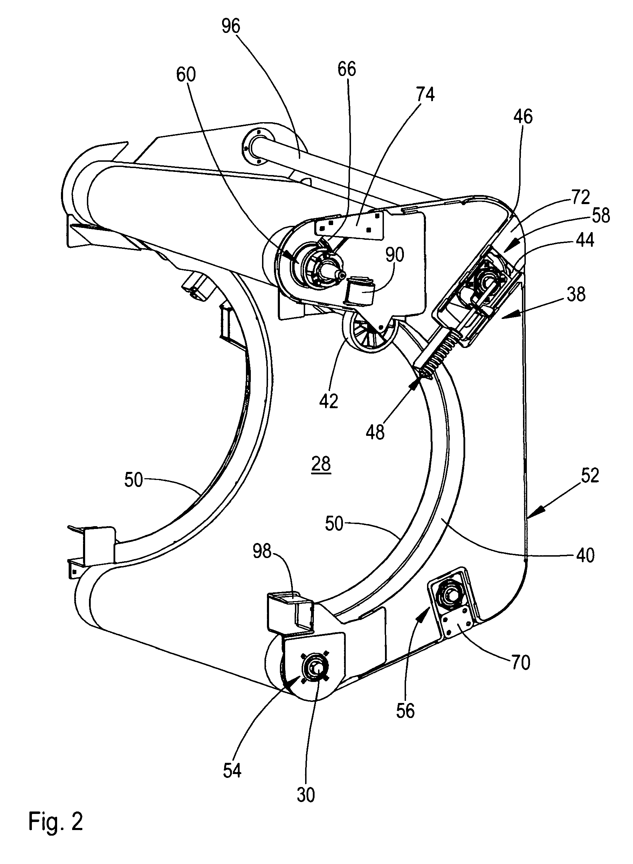

- Fig. 2: a gate of said round baler with a wide web carried on a path on both sides and with a gate lock in perspective view,
- Fig. 3: a right hand part of the gate in a raised position and in contact with a side wall of a bale chamber, in perspective view,
- Fig. 4: a view along the line 4-4 in the situation of figure 3,
- Fig. 5a: a situation in which the gate is closed,
- Fig. 5b: a situation in which the gate is slightly opened,
- Fig. 6: a gate lock and a counter lock and
- Fig. 7: a gate bearing in explosion view.

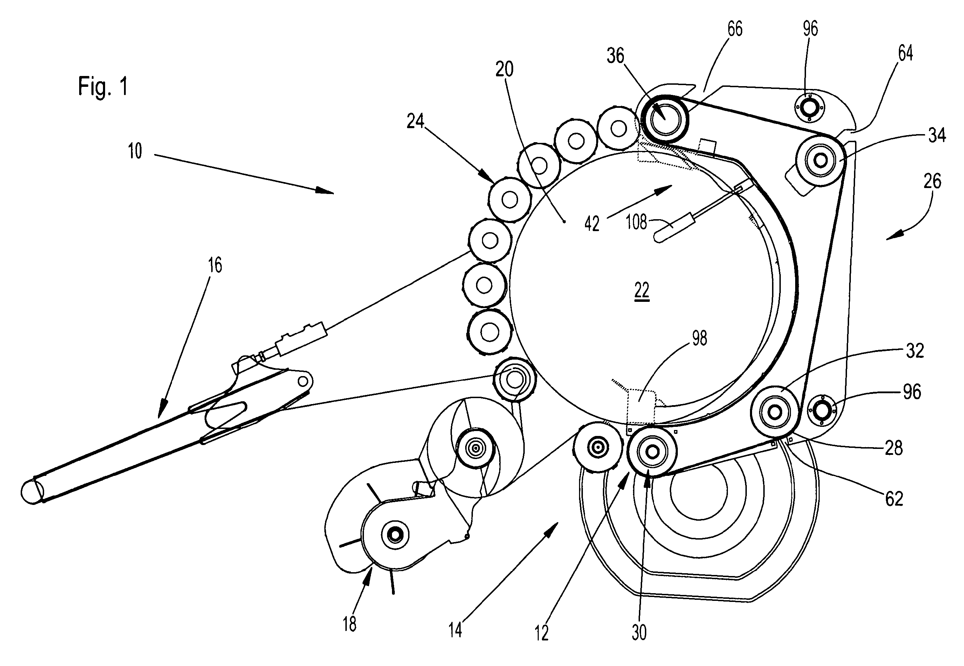

Figure 1 shows a round baler 10 having a frame 12, a chassis 14, a tongue 16, a feeder 18 and a bale chamber 20.

The round baler 10 as shown is of the fixed chamber type, i.e. the bale chamber 20 is of fixed size in the front and of fixed or substantially fixed size in the rear; it could be also of a variable chamber type in the front. While the round baler 10 is mobile, it could also be stationary for use in industry. Normally it is moved over a field to bale harvested crop like straw, hay, grass, cotton or the like, whereas in industry it may bale paper, garbage, etc.

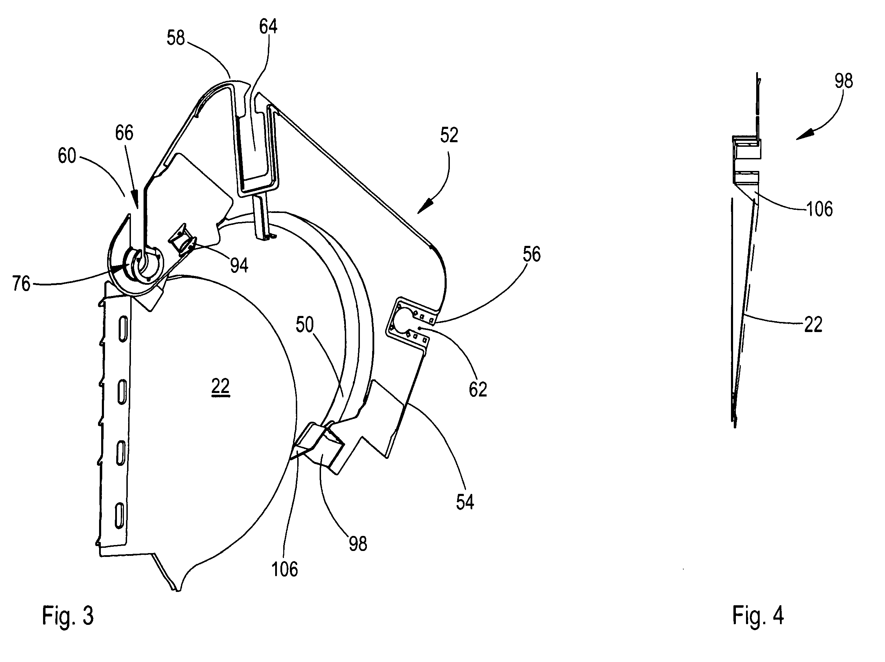

The frame 12 is of a welded and bolted structure, which is not shown in detail here, but is well known in the art, like from JOHN DEERE round balers, and is supported on the chassis 14. Part of the frame 12 are side walls 22, extending vertically and distant from each other in a horizontal direction. These side walls 22 may be of one part along the length of the bale chamber 20 or of two parts, being split and hinged to each other substantially vertically - both types being well known in the art. The side walls 22 are big enough to cover the bale chamber 20 laterally. The outer and free periphery of the side walls 22 - see figure 4 - follow substantially a circle, which does not exceed the diameter of a complete bale; it might also be smaller than the diameter of the bale. As can also be seen in figure 4, the front part of the side walls 22 is hinged, whereas the rear part is free. This free movement away from the bale reduces the friction on the bale, once a gate 26 is raised, yet it seals the bale chamber 20 laterally to the extent possible.

The chassis 14 comprises an axle, wheels, suspension and the like, whatever is necessary to support the frame 12 moveably on the ground.

The tongue 16 connects the round baler 10 to a pulling vehicle and is fixed to the frame 12 or the chassis 14.

The feeder 18 may comprise a pick-up and/or a cutting rotor and/or a cross auger. Latter are not necessary for a round baler, but are often used. The feeder 18 is carried by the frame 12, is variable in height to adjust to the ground contour and feeds material normally lying on the ground rearward into the bale chamber 20.

The bale chamber 20 is surrounded by pressing means 24 in the front and the gate 26 in the rear.

The pressing means 24 in the front is formed as a series of stationary rolls arranged substantially on a semi circle as this is widely known. These rolls are driven in a conventional and thus not described manner.

The gate 26 in the rear mainly contains a single endless, closed surface and flexible web 28, i.e. spanning the entire bale chamber 20 and being of a material known from current round balers on the market. Such a web 28 has several layers of fibers in the lengthwise and crosswise direction and is covered on both sides with rubber or the like having a smooth or profiled surface. The web 28 is made endless by connecting existing ends or by producing it as a single piece. Furthermore and as it will become apparent from the further description the web 28 has a different function in its center area as compared to its lateral end areas, since in the inner or center area it is in contact with the material to be baled and to be moved by the web 28, whereas in the lateral end areas the web 28 has to glide in or on a path 40. Accordingly it may be of different types in its regions, like of a kind creating more friction in the center area compared to the outer areas. Internal crosswise extending fibers - not shown - will be of such strength, that they hinder the web 28 from collapsing into the bale chamber 20 in its upper section. A similar effect may be achieved by fibers being arranged in different layers with respect to the press material contact surface of the web 28, which fibers are connected to each other to provide additional stiffness, like a flat bar extending radially with respect to the centerline of a bale in the bale chamber 20. Other fibers will extend in the lengthwise direction of the web 28. The gate 26 is raised by a gate cylinder 108 as this is well known. As an alternative to the web 28 rolls, chains with slats, small belts, etc. may be used.

The web 28 is routed over a lower front roll 30, a lower rear roll 32, an upper rear roll 34 and an upper front roll 36. The lower front and rear rolls 30 and 32 are journaled freely in the side structures 52 and act as idler rolls, although either of the rolls 30, 32 could be driven to assist in moving the web 28 with the bale. The upper rear roll 34 is journaled moveably against the force of a tensioning mechanism 38, but is also idling only. The upper front roll 36 is driven and rubber covered to create enough friction to move the web 28. All or some or one of the rolls 30 - 36 may have a barrel shape, which assists in keeping the web 28 in the center. Furthermore the path 40 is provided in the form of a sheet metal, bar, rail or the like connected to the side structures 52. Said path 40 follows the shape of the bale chamber 20 for the completed bale, i.e. fully or partly circular. The part creating the path 40 is connected to the side structure 52 by means of angles, blocs or the like by bolting, welding or similar. The web 28 is overlapping the path 40 and can thus glide on it without a gap. The surface of the path 40 is provided or covered by low friction material, like Teflon. The web 28 is moving inside the bale chamber 20 upwardly and outside of it downwardly. It could also be of the opposite way, whereas the function of the rolls 30 and 36 needs to be adjusted. All rolls 30, 32, 34, 36 are oriented in parallel to each other.

Also provided is an idler 42 between the downstream end of the path 40 and the upper front roll 36 to guide the inner run of the web 28. The idler 42 is located such, that it deflects the web 28 away from the edge of path 40 to reduce the friction of the web 28 onto the end edge of the path 40.

The tensioning mechanism 38 has a plate 44 on each side, each slideably received in a cavity 46 in the side structure 52. The plates 44 are carrying the roll 34 and are applied by a spring assembly 48. Said spring assembly 48 has a spring and a bar bearing against the plate 44, which results in a movement of the plate 44 in the cavity 46 such, that the web 28 is tensioned.

Attached at a little distance from the outer surface of the side structure 52 and abutting the path 40 is an inner strip like wall or skirt 50, which like the side walls 22 actually is delimiting the bale chamber 20 laterally. Said skirt 50 is fastened to either the side structure 52 or to the path 40 by appropriate means, like bolts, welding, etc. The radially outer edge of these skirts 50 follows the circular contour of the bale chamber 20 and provides a shoulder on which the web 28 will rest and glide. The radially inner edge of the skirt 50 follows a circle concentric to the bale chamber 20 or bale, whereas the radial extension may be up to 10 or 15 cm or more or less. This radial extension provides for an overlap between the side walls 22 and the skirts 50, when the gate 26 is closed. This overlap will assist in sealing the bale chamber 20 against crop to be baled exiting the bale chamber 20. The skirt 50 extends parallel to the side walls 22 and supports latter against an outward movement due to the pressure inside the bale chamber 20.

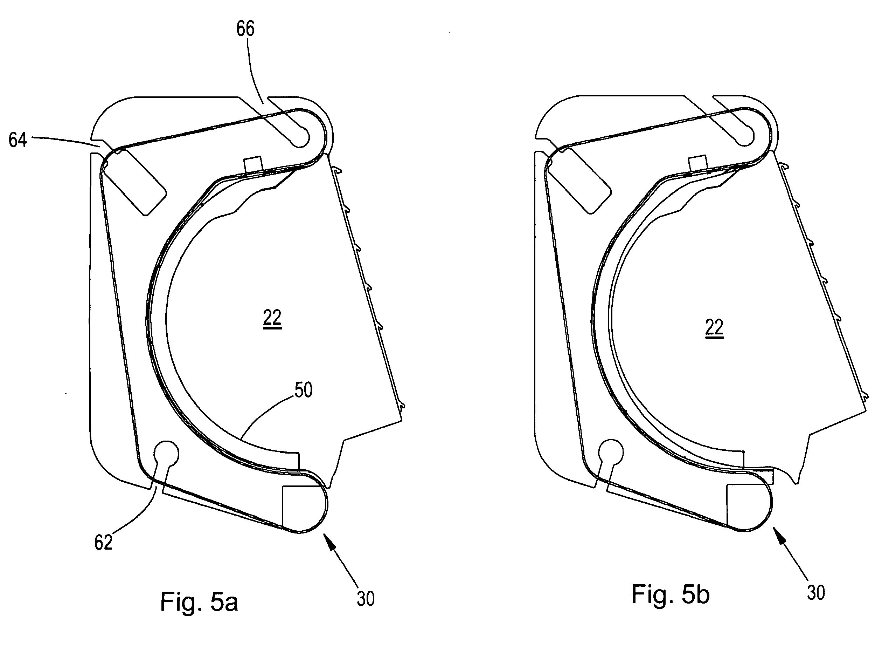

Reference is made to figure 5a, which shows the gate 26 closed. In this situation the side walls 22 are located concentrically in the section of the bale chamber 20 in the gate 26 and the lower roll 30 gets very close to the lower rear edge of the side wall 22. In figure 5b due to the pressure in the bale chamber 20 the gate 26 raised slightly and the lower roll 30 moved away from side wall 22. In this situation the side walls 22 are no longer concentric in the gate 26, but there is still an overlap between the skirts 50 and the side walls 22 sealing the bale chamber 20. Obviously depending on the chosen overlap, bales of different diameter may be produced.

The tensioning mechanism 38 may be provided in the space between the skirt 50 and the outer surface of the side structures 52. The Idler 42 is also arranged between the skirt 50 and said outer surface, whereas said idlers 42 extend beyond the outer surface of the path 40 to touch the web 28 tangentially.

The side structures 52 are formed of strong welded sheet metals and are at least substantially a mirror image of each other. Both side structures assume substantially the shape of an U, when seen from the side, and extend with their longitudinal plane vertically. The side structures 52 form the side of the gate 26. As it can be seen mainly in figure 3, the side structures 52 have in the corner zones a lower front bearing area 54, a lower rear bearing area 56, an upper rear bearing area 58 and an upper front bearing area 60.

The lower front bearing area 54 is substantially a square cutout with a flange to receive a non-shown bearing of the lower front roll 30, as this is widely known.

The lower rear bearing area 56 has a slot 62, which extends lengthwise substantially perpendicular to the lower edge of the side structure 52 and also has a flange to receive a bearing for the lower rear roll 32. The slot 62 opens to the periphery of the side structure 52.

The upper rear bearing area 58 also has a slot 64, which extends lengthwise substantially under an angle of 45 degrees with respect to the adjacent peripheral line of the side structure 52, when it is closed. This slot 64 extends through and in the same direction as the cavity 46 and opens to the periphery of the side structure 52. The bearing of the upper rear roll 34 is not fixed to a flange in this bearing area 58 but to the plate 44 moving along this slot 64 under the control of the tensioning mechanism 38.

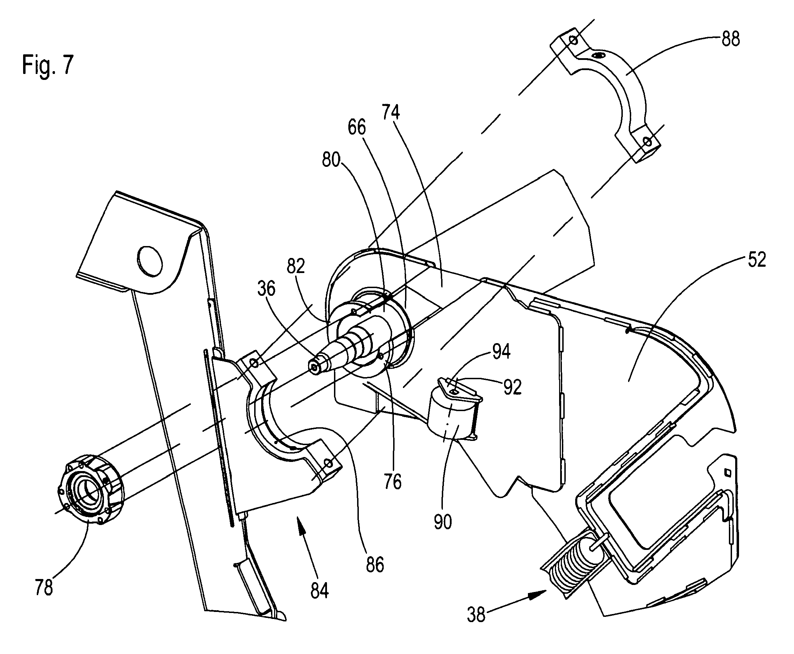

The upper front bearing area 60 again has a slot 66, which extends parallel to the slot 64 and has about the same length. Slot 66 receives a bearing assembly 68, which is described in more detail with respect to figure 7. Flanges, i.e. areas with holes to receive bolts, are provided in the side structures 52 sidewards of the slots 62, 64, 66.

Slot 62 can be closed by a plate 70, slot 64 by a plate 72 and slot 66 by a plate 74 in order to provide for more stability and to avoid sharp edges, whereas these plates 70, 72, 74 are connected to the respective flanges,

The bearing assembly 68 comprises a gate bearing 76 of the thrust bearing type and a roll bearing 78 of the roller bearing type.

The gate bearing 76 is welded or otherwise rigidly fixed to the upper front bearing area 60, extends through the slot 66 and outwardly of the side structure 52. I.e. in this case the gate 26 pivots about an axis in its upper front area, rather than about an axis substantially at the center of the bale. The gate bearing 76 also has a slot 80, which is aligned to the slot 66 in dimension and direction. A flange 82 is provided on a surface of the gate bearing 76 facing outwardly, in order to receive the roll bearing 78. The gate bearing 76 is journalled in a bearing housing 84. Said bearing housing 84 comprises a bearing support 86 fixed to the frame 12 in its upper rear area and a bridge 88, both covering a bearing cavity by 180 degrees each. The bridge 88 is bolted onto the bearing support 86 such, that the bearing cavity is open in the same direction as the extension of the slot 66, when the bridge 88 is dismounted. As it can be seen in figure 7, once plate 74, bridge 88 and roll bearing 78 are dismounted, the roll 36 can be removed radially through slots 66 and 80.

Between bearing assembly 68 and idler 42 a roll 90 is provided. Said roll 90 rotates about an axis 92 formed on a holder 94 at the outer surface of the side structure 52. The side structure 52 leaves an opening at the holder 94, such, that the roll 90 may protrude through the side structure 52 until the path 40, i.e. the plane, where the web 28 moves. Axis 92 is oriented perpendicular to the path 40 and web 28 may touch roll 90 with its side edge during its movement in order to provide for guidance.

Between the side structures 52 at least one brace 96 is provided, which extends parallel to either of the rolls 30 to 36 and provides stability to the entire gate 26. Said brace 96 may be bolted or welded to the side structures 52.

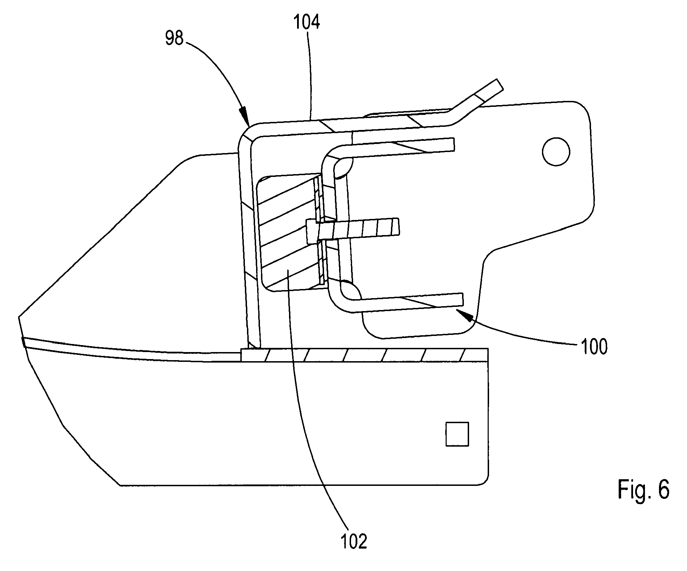

Above the lower front bearing area 54 a gate lock 98 is provided, which has the shape of a cube being open at two adjacent sides, whereas the open sides are at the front and the outside. Said gate lock 98 is of sheet metal or cast and rigidly connected to the side structure 52. A counter lock 100 - see figure 6 - is provided at the frame 12 such, that it may be received in the gate lock 98, when the gate 26 is closed. Between the vertical surfaces of the gate lock 98 and the counter lock 100 facing each other is provided (bolted, glued, etc.) a rubber block 102 to dampen shocks during the movement of the gate 26. A front edge of an upper wall 104 of the gate lock 98 is bent upwardly to assure a smooth mating movement, even, if the side structures 52 would have lowered somewhat. Attached to said upper wall 104 is a horizontal wedge shaped guide 106 (when the gate 26 is closed), whereas a tip of the guide 106 extends outside the side walls 22 and a slanted surface of the guide 106 starting at the tip is oriented such, that the side wall 22 leaning outwards is pushed inwards, when the gate 26 closes, such that it may slide along the inner surface of the skirt 50.

Roll 30 is located such, that it is either in front of or at least below the center of gravity of a bale formed in the bale chamber 20. As a consequence the bale will rest on said roll 30, when the gate 26 is opened, and due to the gate movement will be moved out of the bale chamber 20. Gate lock 98 and counter lock 100 assist in carrying the weight of the bale.

Roll 32 and tensioning mechanism 38 are aligned to each other such, that the tension in the web 28 is not strong enough to carry the entire bale weight; partially the bale will be supported by roll 32, which pushes onto the outer surface of the bale, each time the bale rests on the roll 32, which increases its compaction in the circumferential surface.

It is apparent from the above description, that the round baler 10 and the gate 26 are of a mirror image design, with side structures 52, side walls 22, etc. on both sides.

## Claims

1. Round baler (10) having a frame (12) and a gate (26) with at least one roll (36), whereas the gate (26) and the roll (36) are connected to the frame (12) by means of a gate bearing (76) and a roll bearing (78) arranged concentrically to each other, **characterized in that** the gate bearing (76) has a radially extending slot (80) useful to let pass the roll bearing (78) and/or an end portion of the roll (36).

2. Round baler according to claim 1, **characterized, in that** the gate bearing (76) can be closed by means of a bridge (88).

3. Round baler according to claim 1 or 2, **characterized, in that** the roll bearing (78) is connected to a front radial surface of the gate bearing (76).

4. Round baler according to one or more of the preceding claims, **characterized, in that** the gate (26) comprises a slot (66) extending to its outer contour to allow a removal of the roll (36).

5. Round baler according to one or more of the preceding claims, **characterized, in that** the slot (66) can be closed by a plate (74).

6. Round baler according to one or more of the preceding claims, **characterized, in that** the gate (26) comprises side structures (52) with skirts (50) sideward of the bale chamber (20) and that stationary side walls (22) are provided on the frame (12), whereas the side walls (22) and the skirts (50) can be brought into an overlapping relationship, when the gate (26) is closed.

7. Round baler according to one or more of the preceding claims, **characterized, in that** the gate (26) comprises several rolls (30, 32, 34, 36), over which an endless web (28) is routed, which endless web (28) spans the width of the bale chamber (20).

8. Round baler according to one or more of the preceding claims, **characterized, in that** the web (28) has a closed or substantially closed surface and slides on or in paths (40) on the gate (26).

## Patentansprüche

1. Rundballenpresse (10) mit einem Rahmen (12) und einem Tor (26) mit mindestens einer Rolle (36), wobei das Tor (26) und die Rolle (36) mittels eines Torlagers (76) und eines Rollenlagers (78), die konzentrisch zueinander angeordnet sind, mit dem Rahmen (12) verbunden sind, **dadurch gekennzeichnet, dass** das Torlager (76) einen sich radial erstreckenden Schlitz (80) hat, der dazu dient, das Rollenlager (78) und/oder einen Endabschnitt der Rolle (36) durchzulassen.

2. Rundballenpresse nach Anspruch 1, **dadurch gekennzeichnet, dass** das Torlager (76) mittels einer Brücke (88) geschlossen werden kann.

3. Rundballenpresse nach Anspruch 1 oder 2, **dadurch gekennzeichnet, dass** das Rollenlager (78) mit einer vorderen radialen Fläche des Torlagers (76) verbunden ist.

4. Rundballenpresse nach einem oder mehreren der vorhergehenden Ansprüche, **dadurch gekennzeichnet, dass** das Tor (26) einen Schlitz (66) umfasst, der sich zu seiner äußeren Kontur erstreckt, um ein Entfernen der Rolle (36) zu gestatten.

5. Rundballenpresse nach einem oder mehreren der vorhergehenden Ansprüche, **dadurch gekennzeichnet, dass** der Schlitz (66) durch eine Platte (74) geschlossen werden kann.

6. Rundballenpresse nach einem oder mehreren der vorhergehenden Ansprüche, **dadurch gekennzeichnet, dass** das Tor (26) Seitenstrukturen (52) mit Schürzen (50) seitlich von der Ballenkammer (20) umfasst und dass feststehende Seitenwände (22) am Rahmen (12) vorgesehen sind, wobei die Seitenwände (22) und die Schürzen (50) in eine überlappende Beziehung gebracht werden können, wenn das Tor (26) geschlossen ist.

7. Rundballenpresse nach einem oder mehreren der vorhergehenden Ansprüche, **dadurch gekennzeichnet, dass** das Tor (26) mehrere Rollen (30, 32, 34, 36) umfasst, über die ein Endlosband (28) geführt ist, wobei das Endlosband (28) die Breite der Ballenkammer (20) überspannt.

8. Rundballenpresse nach einem oder mehreren der vorhergehenden Ansprüche, **dadurch gekennzeichnet, dass** das Band (28) eine geschlossene oder im Wesentlichen geschlossene Oberfläche hat und auf oder in Bahnen (40) auf dem Tor (26) gleitet.

## Revendications

1. Roto-presse (10) ayant un châssis (12) et une porte (26) dotée d'au moins un rouleau (36), tandis que la porte (26) et le rouleau (36) sont reliés au châssis (12) au moyen d'un palier de porte (76) et d'un palier de rouleau (78) agencés de manière concentrique l'un par rapport à l'autre, **caractérisée en ce que** le palier de porte (76) a une fente (80) s'étendant radialement utile pour laisser passer le palier de rouleau (78) et/ou une partie d'extrémité du rouleau (36).

2. Roto-presse selon la revendication 1, **caractérisée en ce que** le palier de porte (76) peut être fermé au moyen d'un pont (88).

3. Roto-presse selon la revendication 1 ou 2, **caractérisée en ce que** le palier de rouleau (78) est relié à une surface radiale avant du palier de porte (76).

4. Roto-presse selon l'une quelconque ou plusieurs des revendications précédentes, **caractérisée en ce que** la porte (26) comprend une fente (66) s'étendant jusqu'à son contour extérieur pour permettre le retrait du rouleau (36).

5. Roto-presse selon l'une quelconque ou plusieurs des revendications précédentes, **caractérisée en ce que** la fente (66) peut être fermée par une plaque (74).

6. Roto-presse selon l'une quelconque ou plusieurs des revendications précédentes, **caractérisée en ce que** la porte (26) comprend des structures latérales (52) dotées de collerettes (50) latéralement par rapport à la chambre à balles (20) et **en ce que** des parois latérales fixes (22) sont prévues sur le châssis (12), tandis que les parois latérales (22) et les collerettes (50) peuvent être amenées en relation de chevauchement lorsque la porte (26) est fermée.

7. Roto-presse selon l'une quelconque ou plusieurs des revendications précédentes, **caractérisée en ce que** la porte (26) comprend plusieurs rouleaux (30, 32, 34, 36) par-dessus lesquels est acheminée une bande sans fin (28), laquelle bande sans fin (28) couvre la largeur de la chambre à balles (20).

8. Roto-presse selon l'une quelconque ou plusieurs des revendications précédentes, **caractérisée en ce que** la bande (28) a une surface fermée ou sensiblement fermée et glisse sur ou dans des chemins (40) sur la porte (26).
